# FASCICULE DE BREVET EUROPEEN

(11) **EP 0 906 001 B1**
(45) Date de publication et mention de la délivrance du brevet: **13.11.2002**
(21) Numéro de dépôt: 98118056.5
(22) Date de dépôt: 23.09.1998
(51) Int. Cl.: H05B 33/08, B60Q 1/26

(54) **Circuit à diodes électroluminescentes pour feu de véhicule automobile et feu de véhicule automobile comportant un tel circuit**
LED-Schaltung für Kraftfahrzeugleuchte, und Kraftfahrzeugleuchte damit
LED circuit for vehicle lamp, and vehicle lamp comprising such a circuit

(30) Priorité: 24.09.1997 FR 9711877
(43) Date de publication de la demande: 31.03.1999
(73) Titulaire: VALEO ELECTRONIQUE, 94000 Creteil (FR)
(72) Inventeur: Poirot, Pascal, 91640 Briis sous Forges (FR); Hamzaoui, Azedine, 93390 Clichy sous Bois (FR)
(74) Mandataire: Lemaire, Marc

(56) Documents cités:
- EP-A- 0 695 907
- US-A- 5 038 255

## Description

La présente invention et relative à des circuits à diodes électroluminescentes pour des feux de véhicule automobile.

Elle concerne également des feux de véhicule automobile comportant de tels circuits.

Classiquement, dans un feu de véhicule automobile à diodes électroluminescentes, les diodes sont portées sur un substrat, qui est par exemple un circuit imprimé, et il est prévu un circuit de régulation qui est généralement et principalement constitué par une résistance de puissance et qui est déporté par rapport aux diodes électroluminescentes.

Un feu de ce type a par exemple été décrit dans le brevet US 5,325,271.

Il a récemment été proposé une structure de feu à diodes électroluminescentes permettant de supprimer ce circuit de régulation déporté. La solution proposée consistait à incorporer au réseau de diodes électroluminescentes des résistances traversantes, chacune associée à une diode et montée en série avec celle-ci.

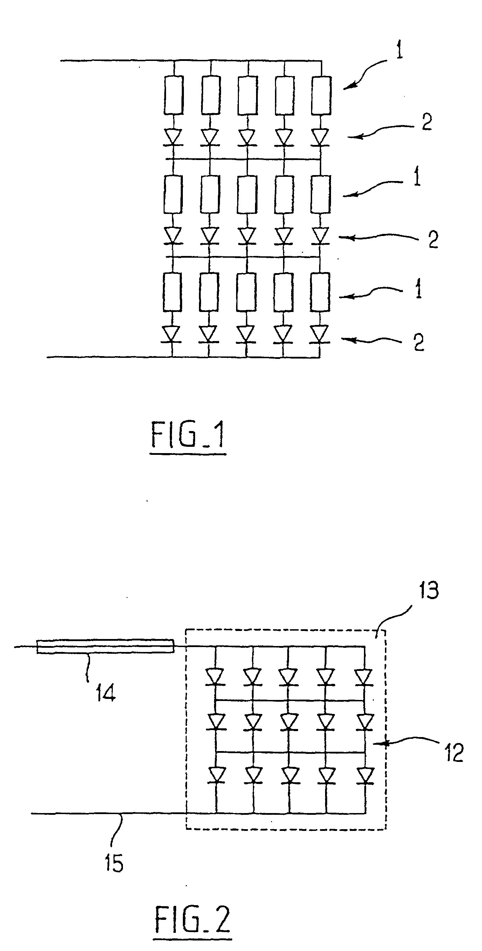

Un circuit de ce type est illustré sur la figure 1, sur laquelle les résistances ont été référencées par 1, tandis que les diodes ont été référencées par 2.

Une telle structure présente l'avantage d'éliminer les problèmes liés à la connectique filaire reliant le substrat portant les diodes électroluminescentes au circuit de régulation constitué par la résistance de puissance.

Toutefois, cette solution n'est pas encore pleinement satisfaisante.

En particulier, la proximité des résistances et des diodes électroluminescentes impose un échauffement excessif à ces dernières. Il en résulte une baisse importante de leurs performances (chute d'émission de l'ordre de 40 %).

Un but de l'invention est de proposer une solution alternative, qui présente les mêmes avantages, notamment de coût et de qualité, que les structures du type de celle illustrée sur la figure 1, sans en présenter les inconvénients.

Elle propose à cet effet un circuit à diodes électroluminescentes pour feu de véhicule automobile comportant un circuit imprimé, ou tout autre support assurant l'interconnexion entre les diodes, sur lequel est implanté un réseau de diodes électroluminescentes et deux fils d'alimentation reliés audit réseau, caractérisé en ce que l'un au moins de ces fils est un fil résistif présentant une résistance linéique supérieure à 1 ohm/m, la longueur du (ou des) fil(s) résistif(s) étant telle que ledit (ou lesdits) fil(s) assure(nt) la régulation du courant d'alimentation des diodes électroluminescentes.

Par ailleurs, l'invention concerne également un feu de véhicule automobile à diodes électroluminescentes, caractérisé en ce qu'il comporte un circuit du type précité.

D'autres caractéristiques et avantages de l'invention ressortiront encore de la description qui suit. Cette description et purement illustrative et non limitative. Elle doit être lue en regard des dessins annexés sur lesquels :
- la figure 1, déjà analysée, illustre un circuit à diodes électroluminescentes connu de l'art antérieur ;
- la figure 2 illustre un circuit à diodes électroluminescentes conforme à un mode de réalisation possible de l'invention.

Le circuit illustré sur la figure 2 comporte un réseau de diodes électroluminescentes 12 monté sur un circuit imprimé 13, ainsi que deux fils de connectique 14 et 15 destinés par exemple à permettre de relier ledit réseau de diodes 12 à une source d'alimentation.

L'un au moins de ces deux fils 14, 15 est un fil résistif qui présente une résistance linéique supérieure à 1 Ω/m.

Ainsi, la régulation du courant dans les diodes 12 est réalisée par la résistance déportée que constitue(nt) le ou les fils d'alimentation 14, 15.

Bien entendu, il peut être prévu que seul l'un des fils d'alimentation 14, 15 soit un fil résistif, l'autre étant un conducteur standard, ou encore en variante que les deux fils 14, 15 soient des fils résistifs.

Comme fil résistif, on utilise avantageusement une âme de composition Nickel/Chrome. Un tel fil résistif est par exemple un fil commercialisé par la société AXON'CABLE S.A. sous la dénomination NIKROTHAL 80,70 présentant un diamètre de 0,1 mm et une résistance linéique à 20°C de 139 ohms/m.

La longueur ou le diamètre (déterminant la résistance linéique) du ou des fils résistifs est déterminée en fonction de la valeur désirée pour la résistance de régulation.

Son diamètre impose des contraintes de sertissage sur les cosses des connecteurs.

Par ailleurs, un tel fil résistif est gainé par une matière isolante. Celle-ci est par exemple du fluoroéthylène propylène (FEP), matériau qui peut supporter une température de 205°C en régime permanent.

Selon les contraintes imposées, notamment quant à l'inflammabilité ou à la tenue en température du fil résistif gainé, d'autres matières sont bien entendu envisageables.

Sur les figures 1 et 2, on a représenté des réseaux de diodes électroluminescentes dans lesquels lesdites diodes sont réparties selon des matrices 3x5. Bien entendu, ce nombre de diodes et cette répartition ne sont donnés qu'à titre illustratif.

Comme on l'aura compris, le circuit ne comporte préférentiellement aucun composant résistif, les fonctions résistives étant principalement assurer par le ou les fils d'alimentation.

## Revendications

1. Circuit à diodes électroluminescentes pour feu de véhicule automobile comportant un support, tel qu'un circuit imprimé (13), sur lequel est implanté un réseau de diodes électroluminescentes (12) et deux fils d'alimentation (14, 15) reliés audit réseau, **caractérisé en ce que** l'un au moins de ces fils (14, 15) est un fil résistif présentant une résistance linéique supérieure à 1 ohm/m, la longueur du (ou des) fil(s) résistif(s) étant telle que ledit (ou lesdits) fil(s) assure(nt) la régulation du courant d'aliméntation des diodes électroluminescentes.

2. Circuit selon la revendication 1, **caractérisé en ce qu'**un fil résistif présente un âme de composition Nickel/Chrome.

3. Circuit selon l'une des revendications précédentes, **caractérisé en ce qu'**un fil résistif est un fil gainé par un matériau isolant.

4. Circuit selon l'une des revendications précédentes, **caractérisé en ce qu'**il ne comporte aucun composant résistif.

5. Feu de véhicule automobile à diodes électroluminescentes, **caractérisé en ce qu'**il comporte un circuit selon l'une des revendications 1 à 4.

## Patentansprüche

1. LED-Schaltung für Kraftfahrzeugleuchte mit einem Träger, wie etwa einer gedruckten Schaltung (13), auf dem ein Netz aus Leuchtdioden (12) und zwei mit dem Netz verbundene Zuleitungsdrähte (14, 15) aufgebracht sind,
**dadurch gekennzeichnet, dass** wenigstens einer der Drähte (14, 15) ein Widerstandsdraht ist, der einen Widerstandsbelag von mehr als 1 Ohm/m aufweist, wobei die Länge des Widerstandsdrahtes (bzw. der Widerstandsdrähte) so ist, dass der Draht (bzw. die Drähte) die Regelung der Speisestroms der Leuchtdioden gewährleistet.

2. Schaltung nach Anspruch 1,
**dadurch gekennzeichnet, dass** ein Widerstandsdraht eine Seele aus einer NickelChrom-Zusammensetzung aufweist.

3. Schaltung nach einem der vorhergehenden Ansprüche,
**dadurch gekennzeichnet, dass** ein Widerstandsdraht ein mit einem isolierenden Material ummantelter Draht ist.

4. Schaltung nach einem der vorhergehenden Ansprüche,
**dadurch gekennzeichnet, dass** sie kein Widerstandsbauteil umfasst.

5. Kraftfahrzeugleuchte mit Leuchtdioden,
**dadurch gekennzeichnet, dass** sie eine Schaltung nach einem der Ansprüche 1 bis 4 umfasst.

## Claims

1. Light-emitting diode circuit for a motor vehicle light comprising a support, such as a printed circuit (13), on which there is located an array of light-emitting diodes (12) and two supply wires (14, 15) connected to the said array, **characterised in that** at least one of these wires (14, 15) is a resistive wire having a resistance per unit length greater than 1 ohm/m, the length of the resistive wire or wires being such that the said wire or wires provide the regulation of the supply current to the light-emitting diodes.

2. Circuit according to Claim 1, **characterised in that** a resistive wire has a core with a nickel/chromium composition.

3. Circuit according to one of the preceding claims, **characterised in that** a resistive wire is a wire sheathed in an insulating material.

4. Circuit according to one of the preceding claims, **characterised in that** it comprises no resistive component.

5. Motor vehicle light with light-emitting diodes, **characterised in that** it comprises a circuit according to one of Claims 1 to 4.
